Europäisches Patentamt

European Patent Office

Office européen des brevets

(11) Veröffentlichungsnummer: **0 340 657**
**A1**

## (12) EUROPÄISCHE PATENTANMELDUNG

(21) Anmeldenummer: 89107746.3

(51) Int. Cl.⁴: **B65D 81/32 , B65B 29/10**

(22) Anmeldetag: 28.04.89

(30) Priorität: 06.05.88 DE 3815414
16.02.89 DE 3904639

(43) Veröffentlichungstag der Anmeldung:
08.11.89 Patentblatt 89/45

(84) Benannte Vertragsstaaten:
DE FR GB IT

(71) Anmelder: ARA-Werk Krämer GmbH + Co.
Wehrstrasse 2-8 Postfach 61
D-7441 Unterensingen(DE)

(72) Erfinder: Segatz, Wilhelm
Blumhardtweg 9
D-7321 Tell u.A.(DE)

(74) Vertreter: Patentanwälte RUFF, BEIER und
SCHÖNDORF
Neckarstrasse 50
D-7000 Stuttgart 1(DE)

(54) Zylindrische Packung für pastöse Massen, insbesondere Schlauchpackung, sowie Verfahren und Vorrichtung zu ihrer Herstellung.

(57) Die Erfindung betrifft eine zylindrische Packung für pastöse Massen, insbesondere Schlauchpakkung, für das Auspressen der pastösen Massen aus einer Düse mit Hilfe eines in Richtung auf die Düse axial verschiebbaren kolbenartigen Druckstückes in einer Austragvorrichtung. Die zylindrische Packung (1) weist mindestens eine in ihrer Längsrichtung verlaufende Trennwand (8 bis 8‴) auf, die sich über die gesamte Länge des Packungsinnenraumes erstreckt und den Zylinder (2) in mindestens zwei getrennte, in Längsrichtung verlaufende, einen im wesentlichen konstanten Teilquerschnitt des Zylinders aufweisende Kammern (9 bis 9‴; 10 bis 10‴) abdichtend unterteilt.

FIG.2

**Zylindrische Packung für pastöse Massen, insbesondere Schlauchpackung, sowie Verfahren und Vorrichtung zu ihrer Herstellung**

Die Erfindung betrifft eine zylindrische Packung für pastöse Massen, insbesondere Schlauchpackung, für das Auspressen der pastösen Massen aus einer Düse mit Hilfe eines in Richtung auf die Düse axial verschiebbaren kolbenartigen Druckstücks in einer Austragvorrichtung, ein Verfahren zur Herstellung der Packung sowie ihre Verwendung.

Als pastöse Massen kommen vor allem Dichtungsmassen, Schaumstoffvorprodukte, Beschichtungsmassen, Klebstoffe u.dgl in Betracht.

Bekannte Packungen für pastöse Massen liegen in verschiedener Ausführung vor. Üblich sind Kartuschen in Form von topfartigen Hülsen, die an einem verschlossenen Ende einen Ansatz für eine Austragdüse o.dgl aufweisen. Das offene Ende der Hülse ist nach deren Befüllung mit einem in der Hülse axial verschiebbaren als Druckstück dienenden Verschluß versehen. Solche Kartuschen können in mechanisch oder pneumatisch betriebene Austragvorrichtungen eingesetzt werden. Es gibt auch zylindrische Schlauchpackungen, bei denen die pastöse Masse in eine schlauchförmige Umhüllung aus Folie gefüllt ist, deren Enden durch einen Clip-Verschluß oder durch Verschweißung verschlossen sind. In der Regel sind diese schlauchförmigen Umhüllungen aus Folienbändern durch Längsverschweißung ihrer Ränder hergestellt. Wenn die Schlauchpackung diffusionsdicht sein soll, was bei Einkomponenten-Material, das unter Luftfeuchtigkeit abzubinden vermag, normalerweise der Fall ist, dann ist das Folienmaterial normalerweise eine Verbundfolie, bei der eine Folienschicht aus Aluminiumfolie besteht.

Sollen Produkte aus zwei oder mehr Komponenten durch gemeinsames Austragen und Zusammenmischen der Komponenten hergestellt werden, dann kommen normalerweise größere Vorratsbehältnisse für die einzelnen Komponenten zur Anwendung, wobei zusätzlich Dosiereinrichtungen zur Einstellung des gewünschten Mengenverhältnisses der Komponenten und Mischeinrichtungen vorgesehen sind. Es wurde auch schon vorgeschlagen, zur Herstellung von Zweikomponenten-Produkten Austragvorrichtungen zu schaffen, die zwei zylindrische Packungen der eingangs genannten Art aufnehmen können und zum gemeinsamen Austragen der Masse aus den beiden Packungen eingerichtet sind.

Der Erfindung liegt die Aufgabe zugrunde, eine einfach zu handhabende zylindrische Packungseinheit zu schaffen, die zur Ausgabe von Mehrkomponenten-Ausgangsmassen geeignet ist und in die herkömmlichen Austragvorrichtungen einsetzbar ist.

Die Erfindung ist dadurch gekennzeichnet, daß die zylindrische Packung zur Aufnahme von mindestens zwei verschiedenen Massen mindestens eine in ihrer Längsrichtung verlaufende Trennwand aufweist, die sich über die gesamte Länge des Packungsinnenraumes erstreckt und den Zylinder in mindestens zwei getrennte, in Längsrichtung verlaufende einen im wesentlichen konstanten Teilquerschnitt des Zylinders aufweisende Teilkammern abdichtend unterteilt.

Durch eine solche Unterteilung entlang der Längsrichtung erhält die zylindrische Packung die Funktion einer Mehrkomponenten-Packung, gleicht in ihren äußeren Abmessungen jedoch den üblichen Einkomponenten-Packungen, so daß sie in deren Austragvorrichtungen passen und die Massen wie bei Einkomponenten-Packungen ausgetragen werden können. Hierzu weist die Austragsvorrichtung bzw. die Packung vorzugsweise eine gemeinsame zentrische Austragsdüse auf, durch die die verschiedenen Massen gemeinsam, insbesondere unter gegenseitiger Vermischung, austragbar sind. Die einzelnen Komponenten in der Mehrkomponentenpackung haben vorzugsweise die gleiche Viskosität. Die Komponenten sind insbesondere solche zur Herstellung von elastischen Dichtungsmassen oder solche zur Herstellung von Kunststoff-Schäumen, insbesondere mit Wasser getriebenen 2-Komponenten-Polyurethanschäumen.

Die Trennwand ist vorzugsweise flexibel ausgebildet und beim Vorschub des Druckstücks, ausgehend von dem dem Druckstück benachbarten Ende der Packung zusammenschiebbar, insbesondere ziehharmonikaartig zusammenfaltbar. Auf diese Weise ist das Packungsvolumen beim Austragen des Inhalts in gleicher Weise verkleinerbar wie bei den bekannten Packungen. Die Trennwand besteht vorzugsweise aus einer Folie. Sie kann je nach Art der Packung mit der Innenwand der zylindrischen Packung lösbar, beispielsweise abreißbar verbunden oder bleibend verbunden sein.

Die Packung ist vorzugsweise eine Schlauchpackung in Form eines mit den pastösen Massen prall gefüllten, geradlinigen Schlauches aus Folie mit kreisrundem Querschnitt, der an beiden Enden dicht verschlossen ist. Bei einer bevorzugten Ausführungsform dieser Art erstreckt sich die mindestens eine Trennwand über die gesamte Länge des Schlauches bis in die Schlauchenden und ist beim Austragen der Massen gemeinsam mit dem Schlauch zusammenschieb- bzw. faltbar. Die Schlauchpackung besitzt vorzugsweise, wie bei den bekannten Packungen, an den Enden einen zentralen Verschluß, der durch Zusammenschnüren des Schlauches gebildet und durch Verschweißen des Schlauchendes und/oder Zusammenklemmen mit einer Klammer abgedichtet ist. Dadurch, daß sich die Trennwand bis in das Schlauchende erstreckt, ist sichergestellt, daß die in den getrennten Kammern enthaltenen verschiedenen Massen völlig getrennt voneinander sind und nicht miteinander reagieren können. Die mindestens eine Trennwand und der Schlauchmantel sind vorzugsweise durch Verschweißung miteinander verbunden. Hierzu bestehen vorteilhafterweise sowohl der Schlauchmantel als auch die Trennwand aus Folienmaterial mit Oberflächen aus verschweißbaren thermoplastischen Kunststoffen, wie beispielsweise Polypropylen. Vorzugsweise bestehen sowohl Trennwand als auch Schlauchwand aus demselben Folienmaterial

Die Teilkammern der Packung können gleiche oder unterschiedliche Querschnittsform besitzen. Sie können auch eine unterschiedliche Querschnittsgröße besitzen, was dann der Fall ist, wenn sie verschiedene Teilvolumina der verschiedenen pastösen Massen enthalten. Stets sind die Teilkammern vollständig und ohne Lufteinschlüsse mit den entsprechenden Massen gefüllt.

Die mindestens eine Trennwand kann in ihrer Lage in der Packung festgelegt sein, was insbesondere dann der Fall ist, wenn sie zwischen längs verlaufenden Befestigungslinien der Packung geradlinig verläuft. Durch entsprechende Anordnung dieser Befestigungslinien zueinander kann das Größenverhältnis der Teilkammern zueinander bestimmt werden. So kann die mindestens eine Trennwand im Querschnitt der Packung kreissehnen-förmig verlaufen. Mehrere Trennwände können auch sternförmig verlaufen. Es ist aber auch möglich, die mindestens eine Trennwand in Querrichtung der Packung verschiebbar auszubilden, so daß sie ihre definierte Lage erst beim Befüllen einnimmt. Hierzu kann eine Kammer stärker befüllt werden als eine andere, so daß sich die Trennwand durch entsprechende Verschiebung dem unterschiedlichen Befüllungsverhältnis automatisch anpaßt. Hierbei ist die Lage der Trennwand über die gesamte Länge der Packung gleich, so daß bei der Ausgabe der Massen das Mischungsverhältnis konstant bleibt.

Die Verschiebbarkeit der Trennwand in der Packung kann dadurch erreicht werden, daß die Trennwand in ihren Querschnittsabmessungen breiter ist als der lichte Abstand der Befestigungsstellen an der kreisrunden Packungswandung, so daß sie nach der einen oder anderen Seite auszuweichen vermag. Vorzugsweise ist die Trennwand in den Querschnittsabmessungen breiter als das Bogenmaß eines sich an die Befestigungsstellen anschließenden Schlauchabschnittes. Dadurch kann verhindert werden, daß bei extremen Mischungsverhältnissen die Trennwand bei einer normalerweise erfolgenden prallen Befüllung die Umfangsspannung aufzunehmen hat und ein Teilabschnitt des Außenumfanges entspannt ist. Eine Verschieblichkeit der Trennwand in der Verpackung kann mit Vor teil dadurch erreicht werden, daß die Trennwand in der Verpackung im Querschnitt bogenförmig, insbesondere S-förmig bzw. spiegelbildlich dazu verläuft.

Normalerweise besitzt die Packung mindestens zwei Verbindungs- bzw. Längsschweißnähte, an denen die mindestens eine Trennwand am Außenmantel befestigt ist. Es ist jedoch nicht erforderlich, eine Trennwand an zwei Seiten festzulegen. Vielmehr ist es auch möglich, die Trennwand im Querschnitt im wesentlichen kreisförmig auszubilden und nur entlang einer Längslinie an der Außenwand zu fixieren, so daß zur Herstellung der erfindungsgemäßen Packung eine Verbindungs-bzw. Längsschweißnaht ausreicht. In extremen Fällen ist es sogar möglich, zur Bildung mindestens einer Teilkammer als Trennwand einen gesonderten Schlauch geringeren Durchmessers vorzusehen, der im Inneren der Packung ohne Längsfixierung angeordnet ist. Bei einer Schlauchpackung ist bei einer solchen Ausführungsform der innere Schlauch dann lediglich an den beiden Schlauchenden fixiert. Dadurch, daß die aus Folie bestehende Trennwand beim Austragen der Massen, ausgehend von dem dem Druckstück benachbarten Ende zusammengeschoben wird, bleibt ihre Lage in dem noch befüllten Teil der Packung unverändert. Da die Trennwand flexibel ist, aus dünner Folie besteht und in aller Regel einlagig ist, läßt sie sich leicht zusammenfalten, ohne daß von der Folie Vorschubkräfte in Richtung zur Austragdüse übertragen werden.

Die Herstellung der Packung kann in einfacher Weise erfolgen. Für die erfindungsgemäße Schlauchpackung eignet sich die an sich bekannte Herstellung aus Folienbändern mit Hilfe einer Längsverschweißung. Hierzu kann das Folienband unter gleichzeitiger Ausbildung der mindestens einen Trennwand gebogen bzw. gefaltet werden. Wenn beispielsweise nur eine Trennwand vorgesehen ist, ist eine Formung nach Art eines e-bzw. S geeignet, wobei dann die freien Längsränder an die entsprechenden gegenüberliegenden Längsabschnitte ange schweißt werden. Es ist auch möglich, ein Folienband zweifach oder mehrfach einzurollen und die einzelnen Windungen der so erhaltenen, im Querschnitt spiralförmigen Aufwicklung durch eine einzige Längsschweißnaht miteinander zu verbinden. Es ist auch möglich, die Schlauchpackung unter Verwendung von mindestens zwei Folienbändern herzustellen, indem beispielsweise ein Folienband zu einem schlauchförmigen Teilkreis unrunden Querschnitts zusammengeschweißt wird und der kreisrunde Querschnitt dann durch längsseitiges Anschweißen von mindestens einem weiteren Band vervollständigt wird.

Bei einer besonders bevorzugten Ausführungsform der Erfindung, die leicht herstellbar ist, besteht die Packung aus einem längsgeschweißten Folienschlauch, aus einer Folie, der im Inneren eine Trennwand aus einer zweiten schmäleren Folie besitzt, die im Querschnitt geradlinig verläuft und nach einer Richtung abgebogene Längsränder aufweist, die an der Innenwand des Schlauches anliegen und mit dieser längsverschweißt sind. Dabei kann eine Schweißnaht der Längsränder der Trennwand auch gleichzeitig die Längsschweißnaht des Folienschlauches sein. Äußerlich sieht der Schlauch, bei dem sämtliche Schweißnähte vorzugsweise in der Mantelfläche des Schlauches liegen, ähnlich aus wie ein an sich bekannter Schlauch ohne Trennwand, mit der Ausnahme, daß er eine oder zwei zusätzliche Längsschweißnähte besitzt, der durch die Trennwand gehalten wird.

Eine derartige Schlauchpackung kann mit Vorteil in der Weise hergestellt werden, daß zunächst die Trennwand aus einer von einer Rolle abgezogenen Folienbahn geformt und um diese Trennwand herum dann der Schlauch aus einer zweiten entsprechend breiteren Folienbahn geformt wird, wonach durch an sich bekannte Längsverschweißung die Längsschweißnaht des Schlauches und die Verbindungsnähte mit den Rändern der Trennwand vorgenommen werden.

Die Erfindung betrifft auch eine zur Durchführung des Verfahrens geeignete Vorrichtung. Eine bevorzugte Vorrichtung ist gekennzeichnet durch ein erstes Formstück zur Formung der mindestens einen Trennwand aus mindestens einer Folie, ein zylindrisches Werkzeug mit im wesentlichen kreisrundem Querschnitt, dessen Außenumfang im wesentlichen dem Innenumfang des Schlauches entspricht und das in Längsrichtung entsprechend der Form der Trennwand unter Bildung mindestens eines Spaltes geteilt ist, der zur Aufnahme der Trennwand dient, ein Formstück zur Bildung des Schlauches aus einer zweiten Folie um das Werkzeug und die Trennwand herum sowie Schweißbalken zum Verbinden der Längsränder des Schlauches und der Trennwand im Zusammenwirken mit dem kreisrunden Werkzeug. Mit Hilfe einer solchen Vorrichtung können die erfindungsgemäßen zylindrischen Packungen in analoger Weise hergestellt werden, wie die bekannten nur eine Kammer aufweisenden Schlauchpackungen. Die Herstellung der Packungen erfolgt vorzugsweise halbkontinuierlich, d.h. abschnittsweise, wobei die gebildeten Schlauchabschnitte an einem Ende verschlossen und in Längsrichtung ziehharmonikaartig zusammengeschoben werden, wonach die Befüllung des Schlauchabschnittes mit den Komponenten vorgenommen wird. Zur gleichmäßigen Befüllung werden die Komponenten vorzugsweise gleichzeitig durch Volumendosierung eingefüllt. Gefüllte Schlauchabschnitte werden jeweils am neu gebildeten Ende und am neuen Anfang verschlossen und dann abgelängt.

Die erfindungsgemäße Packung ist in den üblichen Größen der bekannten Einkomponenten-Packungen herstellbar. Die pastösen bzw. plastischen Massen können mit Hilfe der bekannten Austragvorrichtungen ausgepreßt werden und sind dadurch leicht handhabbar. Da die Teilkammern vollständig voneinander getrennt sind, sind die Packungen auch dann, wenn sie miteinander reaktionsfähige Massen enthalten, über lange Zeit la gerfähig. Bei den Schlauchpackungen ergibt sich zudem der Vorteil, daß sämtliche Teilkammern durch Abschneiden eines Endverschlusses in einfacher Weise öffenbar sind.

Weitere Merkmale und Einzelheiten der Erfindung ergeben sich aus den nachfolgenden Beschreibung von bevorzugten Ausführungsformen in Verbindung mit den Unteransprüchen und der Zeichnung.

Fig. 1 eine Ausführungsform einer erfindungsgemäßen Packung in Seitenansicht;

Fig. 2a einen schematischen Querschnitt durch eine Ausführungsform nach der Erfindung;

Fig. 2b, c und d Formgebungen von Folienbahnen zur Herstellung der Ausführungsform nach Fig. 2a;

Fig. 3 ein schematischer Querschnitt einer anderen Ausführungsform nach der Erfindung;

Fig. 4a ein schematischer Querschnitt einer weiteren Ausführungsform nach der Erfindung;

Fig. 4b eine Formgebung einer Folienbahn zur Herstellung der Ausführungsform nach Fig. 4a;

Fig. 5a ein schematischer Querschnitt einer weiteren Ausführungsform nach der Erfindung;

Fig. 5b eine Formgebung einer Folienbahn zur Herstellung der Ausführungsform nach Fig. 5a,

Fig. 6 einen schematischen Querschnitt durch eine bevorzugte Ausführungsform der Erfindung,

Fig. 7 eine schematische Darstellung einer Vorrichtung zur Herstellung einer Schlauchpackung und

Fig. 8 einen schematischen Querschnitt durch eine weitere Ausführungsform.

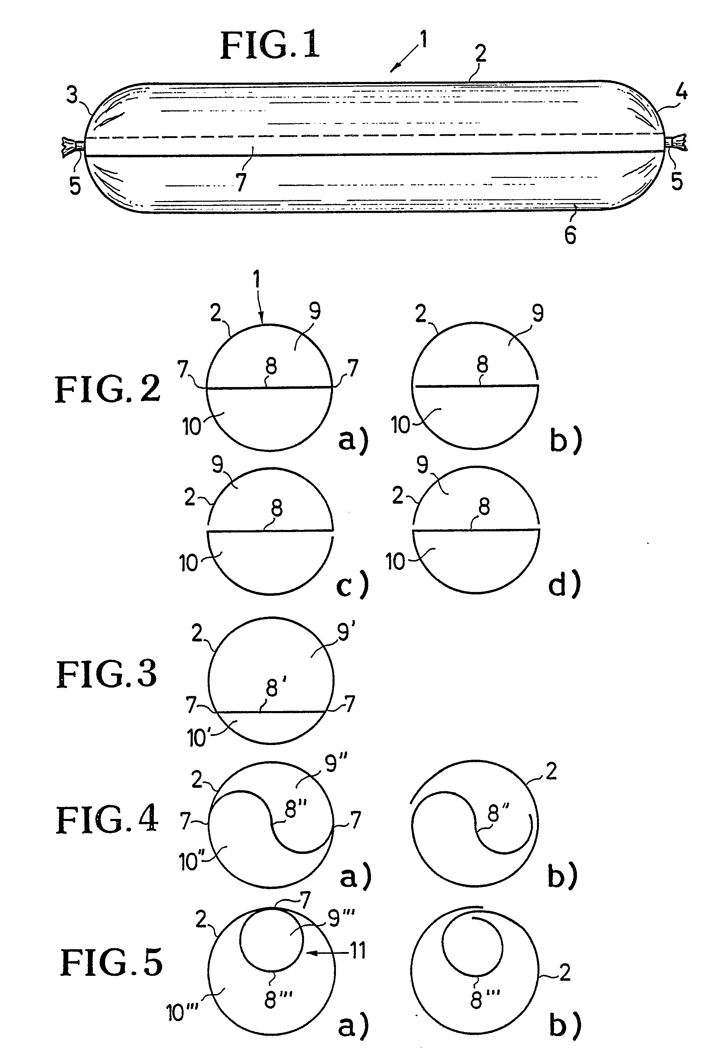

In Fig. 1 ist eine bevorzugte Ausführungsform der Erfindung in Form einer kreiszylindrischen Schlauchpackung 1 dargestellt. Der Außenmantel 2 der Schlauchpackung ist aus einem endlosen Schlauch abgelängt und an seinen beiden Enden 3 und 4 durch Abschnürung abgeflacht verjüngt und mit Hilfe von Metallclips abdichtend verschlossen. Der zylindrische Außenmantel 2 besteht aus einer Verbundfolie 6 in Form einer Aluminiumfolie, die beidseitig mit einer dünnen Schicht aus Polypropylen beschichtet ist. Die Verbundfolie 6 überlappt sich entlang einer Längsschweißnaht 7.

Die Schlauchpackung entspricht in ihrer Länge und ihrem Durchmesser herkömmlichen Schlauchpackungen für Einkomponenten-Dichtungsmassen, beispielsweise Silicon-Dichtungsmassen oder Acryl-Dichtungsmassen.

Wie sich aus den Fig. 2 bis 5 ergibt, sind verschiedene Querschnittsformen für Ausführungsformen der Art nach Fig. 1 möglich. Fig. 2a zeigt eine Querschnittsform mit einer Trennwand 8, die nach Art einer Durchmesserlinie quer durch den kreisförmigen Querschnitt hindurchläuft. Die Trennwand 8 teilt die Packung 1 mittig in zwei gleich große Hälften bzw. Kammern 9 und 10 entlang ihrer Längsachse. Wie Fig. 2b zeigt, kann diese Packung aus einem Folienband hergestellt werden, indem dieses mit Hilfe einer Formschulter im Querschnitt entsprechend einem "G" bzw. "e" geformt wird und die freien Ränder dann unter gegenseitiger Überlappung (in der Zeichnung nicht dargestellt) unter Ausbildung von Längsschweißnähten 7 an die benachbarten Folienseiten ange schweißt werden. Fig. 2c zeigt eine andere Möglichkeit, ebenfalls unter Verwendung einer einzigen Folienbahn, die S-förmig bzw. entsprechend einem spiegelbildlichen S geformt und dann in ähnlicher Weise unter gegenseitiger Überlappung verschweißt wird. Bei der Möglichkeit nach Fig. 2e erfolgt die Herstellung unter Verwendung von zwei verschieden breiten Folienbahnen. Zunächst wird aus der breiteren Folienbahn ein die Kammer 10 ergebendes, schlauchförmiges Gebilde geformt und verschweißt und dann mit Hilfe von Formhaltern zu dem dargestellten unteren Teilkreis geformt, der an seiner Oberseite bereits die geradlinige Trennwand 8 ausgebildet hat. Auf diesen Teilkreis wird an der die Trennwand 8 aufweisenden Seite ein U-förmiger Kreisbogen bzw. eine Rinne längsseitig an den beiden Enden der Trennwand 8 aufgeschweißt, wobei wiederum ein Vollkreis gebildet wird.

Die in Fig. 3 dargestellte Ausführungsform besitzt eine aus der Kreismitte versetzte Trennwand 8' unter Bildung von zwei verschieden großen und verschieden geformten Teilkammern 9' und 10'. Die Querschnittsform nach Fig. 3 kann entsprechend der in den Fig. 2b bis Fig. 2d beschriebenen Formgebungen aus einer oder zwei Folienbahnen erfolgen.

Fig. 4a zeigt einen Querschnitt durch eine Ausführungsform, bei der die Trennwand 8" bogenförmig, nämlich S-förmig verläuft und dadurch in der noch unbefüllten Packung 1 in Querrichtung verschiebbar ist. Bei dieser Ausführungsform ist es möglich, die Größe der Teilkammern 9" bzw. 10" durch die Befüllungsmenge zu bestimmen. Durch die stärkere Befüllung einer Kammer verschiebt sich die Trennwand automatisch unter Verkleinerung der anderen Kammer. Die Packung nach Fig. 4 kann ebenfalls aus einer Folienbahn durch Formung mit Hilfe einer Formschulter hergestellt werden, wie dies in Fig. 4b schematisch dargestellt ist. Auch hier besitzt die Packung zwei Längsschweißnähte 7 an gegenüberliegenden Seiten des Außenmantels 2.

Fig. 5 zeigt eine besondere Ausführungsform, bei der die Trennwand 8''' im Querschnitt die Form eines geschlossenen Kreises besitzt, d.h. in Längsrichtung ebenfalls schlauchförmig ausgebildet ist. Dabei ist der Schlauch 11 mit Hilfe nur einer Längsschweißnaht 7 mit der Innenwand des Außenmantels 2 verbunden, so daß der Schlauch 11 exzentrisch im Außenmantel 2 angeordnet ist. Auch bei dieser Ausführungsform ist die Trennwand 8''' verschiebbar, indem z.B. der Innenschlauch 11 im Querschnitt deformiert wird. Im Unterschied zu Fig. 4 besitzt die vom Innenschlauch 11 gebildete Teilkammer 9''' jedoch ein maximales Volumen bei kreisrundem Querschnitt, so daß das Volumen dieser Teilkammer 9''' durch Befüllung nicht vergrößerbar, wohl aber durch stärkere Befüllung der im Querschnitt sichelförmigen äußeren Kammer 10''' entsprechend verkleinerbar ist. Fig. 5b zeigt eine Herstellungsmöglichkeit für die Ausführungsform nach Fig. 5a. Hier ist wiederum die Herstellung aus einem einzigen Folienband möglich, indem dieses über die Formschulter zu einem kleineren und zu einem sich direkt anschließenden größeren Kreis spiralig eingerollt wird und dann die sich überlappenden Folienränder unter Erfassung der dazwischenliegenden Folienlage entlang einer einzigen Längsschweißnaht 7 zusammengeschweißt werden.

Die Herstellung und Verschweißung der einzelnen Schlauchpackungen kann unter Anwendung an sich bekannter Techniken aus mindestens einer Folienbahn im wesentlichen kontinuierlich mittels Schweißbalken erfolgen. Die Befüllung mit den verschiedenen Komponenten kann unmittelbar bei der Herstellung des Schlauches erfolgen, wobei dann befüllte Schlauchabschnitte in der gewünschten Länge abgeschnürt und nach dem Verschließen, z.B. mit Metallklammern, abgelängt werden können. In ähnlicher Weise können auch Schlauchpackungen mit drei oder mehr Kammern hergestellt werden.

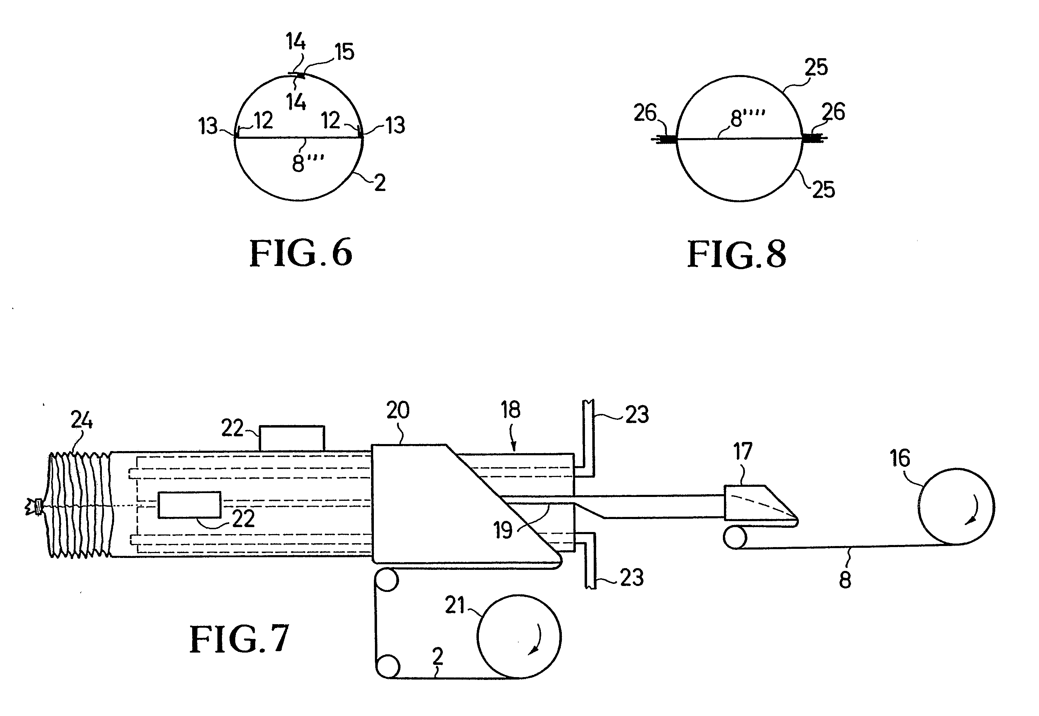

Die Herstellung der erfindungsgemäßen Packung sei anhand der Ausführungsformen nach Fig. 6 erläutert, die wegen ihrer leichten Herstellbarkeit bevorzugt ist. Diese Ausführungsform besitzt eine Trennwand 8'''', die als ebene Folie innerhalb der Schlauchpackung verläuft, ähnlich wie dies bei den Ausführungsformen nach Fig. 2 und Fig. 3 der Fall ist. Dabei sind der zylindrische Schlauchabschnitt 2 der Packung und die Trennwand 8'''' aus ursprünglich getrennten aber sonst gleichen Folien gefertigt. Die Folie, aus der die Trennwand 8'''' gefertigt ist, ist etwas breiter als der Durchmesser des Schlauches. Längsränder 12 der Trennwand 8'''' sind aus der Ebene der Trennwand in dieselbe Richtung abgebogen und liegen an der Innenwandung des zylinderförmigen Schlauches 2 an und sind mit dieser über Längsschweißnähte 13 verbunden. Die Längsränder 14 der den Schlauch bildenden Folie überlappen sich gegenseitig und sind durch eine gesonderte Längsschweißnaht 15 miteinander verbunden. Diese Längsschweißnaht 15 und die Längsschweißnaht 13 eines Trennwandrandes kann als gemeinsame Längsschweißnaht ausgebildet sein, so daß entlang dieser Schweißnaht sowohl die beiden Längsränder 14 der Schlauchfolie als auch ein Längsrand 12 der Trennwand 8'''' aufeinander liegen und miteinander verschweißt sind.

Bei der in Fig. 7 schematisch dargestellten Vorrichtung zur Herstellung der erfindungsgemäßen Packung wird ein Folienband 8 zur Bildung der Trennwand von einer Folienrolle 16 abgezogen. Ein erstes Formstück 17 mit halbkreisförmigem Querschnitt dient zur Formung der Folie zu einer Rinne mit entsprechendem Querschnitt. Ein zylindrisches Werkzeug 18 ist in Längsrichtung unter Bildung eines Spaltes 19 geteilt, der zur Aufnahme der Folie 8 dient und diese Folie zu der ebenen Trennwand mit nach oben geschlagenen Längsrändern formt. Ein zweites Formstück 20 umgibt einen Längsabschnitt der beiden halbzylindrischen Hälften des kreisrunden Werk zeuges und dient zur Formung eines Schlauches aus einer zweiten Folie 2 um das Werkzeug 18. Die Folie 2 wird von einer zweiten Folienrolle 21 abgezogen.

Schweißbalken 22 sind am Außenumfang des Werkzeuges 18 in dessen Längsrichtung angeordnet und dienen zur Verschweißung der Längsränder 12 der Trennwand 8 mit der Schlauchfolie 2 sowie zur Verschweißung der Längsränder 14 der Schlauchfolie 2.

An dem dem ersten Formstück 17 zugewandten Ende des Werkzeuges 18 sind Zuführleitungen 23 zum Zuführen der einzufüllenden Komponenten angeordnet. Durch jede Werkzeughälfte, d.h. auf jeder Seite der Trennwand 8 geht eine Zuführleitung 23 hindurch. Die Zuleitungen 23 führen aus dem vom Formstück 17 abgewandten Ende des Werkzeuges 18 heraus und münden in einen vorgefertigten Schlauchabschnitt 24, der an seinem freien Ende verschlossen ist. Dieser Schlauchabschnitt 24 ist in Längsrichtung zusammengeschoben, wobei auch die Trennwand zusammengeschoben ist. Beim Befüllen mit den Komponenten, die vorzugsweise im wesentlichen die gleiche Viskosität besitzen, erhält der Schlauchabschnitt seine volle Länge. Die Befüllung erfolgt vorzugsweise durch Volumendosierung. Gefüllte Schlauchabschnitte werden am neu gebildeten Ende eingeschnürt und verschlossen, wobei gleichzeitig ein neuer Anfang für den nächsten Schlauchabschnitt gebildet wird. Auf diese Weise sind die einzelnen gefüllten Schlauchpackungen mit samt ihrer Trennwände aus im wesentlichen endlosen Folienbändern im wesentlichen kontinuierlich herstellbar.

Das Werkzeug 18, beziehungsweise seine beiden Hälften, wird an dem Ende, an dem die Leitungen 23 für die Zuführung der Komponenten in das Werkzeug münden, gehalten, insbesondere durch die Leitungen 23 selbst. Im übrigen liegt es frei schwebend im Schlauch 2 und wird gegebenenfalls über diesen abgestützt.

Fig. 8 zeigt eine weitere besonders einfach herstellbare Ausführungsform im Querschnitt. Die ebene Trennwand 8''''' wird aus einer schmalen Folienbahn gebildet. Auf ihre seitlichen Längsränder sind von oben und von unten kreisbogenförmige Rinnen 25 mit seitlich abstehenden Rändern aufgesetzt und damit verschweißt, so daß zwei dreilagige Schweißnähte 26 gebildet werden. Das Bogenmaß der Ω-förmigen Rinnen kann verschieden sein und ist so bemessen, daß beide Rinnen im Querschnitt zusammen einen Vollkreis bilden, der von der ebenen Trennwand 8''''' unterteilt ist. Eine solche Packung kann durch Übereinanderlegen der drei Folien und gemeinsames Verschweißen ihrer Ränder hergestellt werden.

## Ansprüche

1. Zylindrische Packung für pastöse Massen, insbesondere Schlauchpackung, für das Auspressen der pastösen Massen aus einer Düse mit Hilfe eines in Richtung auf die Düse axial verschiebbaren kolbenartigen Druckstückes in einer Austragvorrichtung, dadurch gekennzeichnet, daß die zylindrische Packung (1) mindestens eine in ihrer Längsrichtung verlaufende Trennwand (8 bis 8''') aufweist, die sich über die gesamte Länge des Packungsinnenraumes erstreckt und den Zylinder (2) in mindestens zwei getrennte, in Längsrichtung verlaufende, einen im wesentlichen konstanten Teilquerschnitt des Zylinders aufweisende Kammern (9 bis 9'''; 10 bis 10''') abdichtend unterteilt.

2. Packung nach Anspruch 1, dadurch gekennzeichnet, daß die Teilkammern (9 bis 9'''; 10 bis 10''') mit verschiedenen pastösen Massen gefüllt sind, die vorzugsweise im wesentlichen die gleiche Viskosität besitzen.

3. Packung nach Anspruch 1 oder 2, dadurch gekennzeichnet, daß mindestens die Trennwand (8 bis 8'''), vorzugsweise die gesamte zylindrische Packung (1), aus flexiblem Material besteht und beim Vorschub des Druckstückes, ausgehend von dem dem Druckstück benachbarten Ende zusammenschiebbar, insbesondere nach Art einer Ziehharmonika, zusammenfaltbar ist.

4. Packung nach einem der vorhergehenden Ansprüche, dadurch gekennzeichnet, daß die Trennwand (8 bis 8''') und vorzugsweise auch den Zylinder (2) der Packung (1) aus Folie bestehen.

5. Packung nach einem der vorhergehenden Ansprüche, dadurch gekennzeichnet, daß die Packung eine Schlauchpackung (1) für pastöse Massen in Form eines mit den pastösen Massen gefüllten geradlinigen Schlauches (2) aus Folie (6) ist, daß die ebenfalls aus Folie bestehende mindestens eine Trennwand (8 bis 8''') sich über die gesamte Länge des Schlauches bis in die verschlossenen Enden (3, 4) erstreckt, der Schlauch an beiden Enden (3, 4) unter Einbeziehung der mindestens einen Trennwand dicht verschlossen ist, und beim Austragen der Massen die Trennwand zusammen mit dem Schlauch (2) unter axialer Verkürzung zusammenfaltbar ist.

6. Packung nach einem der vorhergehenden Ansprüche, dadurch gekennzeichnet, daß der Schlauch (2) der Schlauchpackung an seinen Enden (3, 4) unter Bildung von in der Schlauchachse liegenden Verschlüssen eingeschnürt und insbesondere durch Klammern und/oder Verschweißung verschlossen ist.

7. Packung nach einem der vorhergehenden Ansprüche, dadurch gekennzeichnet, daß der Zylinder (2) mindestens an seiner inneren Oberflächenseite aus thermoplastischem Material (6) besteht.

8. Packung nach einem der vorhergehenden Ansprüche, dadurch gekennzeichnet, daß der Schlauch (2) der Schlauchpackung aus mindestens einer Folienbahn (6) durch Längsverschweißung gebildet ist.

9. Packung nach einem der vorhergehenden Ansprüche, dadurch gekennzeichnet, daß die Trennwand (8 bis 8''') mit der Packungswandung (2, 6) durch mindestens eine Längsschweißnaht verbunden ist.

10. Packung nach einem der vorhergehenden Ansprüche, dadurch gekennzeichnet, daß die Teilkammern (9, 9'''; 10, 10''') der zylindrischen Packung (1) eine verschiedene Querschnittsform besitzen.

11. Packung nach einem der vorhergehenden Ansprüche, dadurch gekennzeichnet, daß die Teilkammern (9, 9'''; 10, 10''') eine verschiedene Querschnittsgröße und damit ein verschiedenes Aufnahmevolumen für die pastösen Massen besitzen.

12. Packung nach einem der vorhergehenden Ansprüche, dadurch gekennzeichnet, daß die Trennwand (8 bis 8''') aus dem gleichen Material besteht wie die Schlauchwandung (6).

13. Packung nach einem der vorhergehenden Ansprüche, dadurch gekennzeichnet, daß der Schlauchmantel und die Trennwand aus einer gemeinsamen Folienbahn durch Formen und Verschweißen gebildet sind.

14. Packung nach einem der vorhergehenden Ansprüche, dadurch gekennzeichnet, daß die Trennwand (8, 8') in der Packung (1) im Querschnitt im wesentlichen geradlinig verläuft.

15. Packung nach einem der vorhergehenden Ansprüche, dadurch gekennzeichnet, daß die Trennwand (8'', 8''') in der ungefüllten Packung in Querrichtung verschiebbar ist und ihre Lage bei Befüllung der Packung (1) einnimmt.

16. Packung nach einem der vorhergehenden Ansprüche, dadurch gekennzeichnet, daß eine Trennwand (8) vorgesehen ist, die die Packung (1) in zwei Kammern (9) unterteilt.

17. Packung nach einem der vorhergehenden Ansprüche, dadurch gekennzeichnet, daß die Trennwand (8'''') von einer gesonderten Folie gebildet ist, die in den Zylinder (2) entlang ihrer Ränder eingeschweißt ist, wobei die Ränder vorzugsweise in die gleiche Richtung abgebogen sind und an der Innenseite des Zylinders (2) anliegen.

18. Packung nach einem der vorhergehenden Ansprüche, dadurch gekennzeichnet, daß Schweißnähte (7, 13, 15), die eine Verbindung im Bereich des Zylinders (2) schaffen, vorzugsweise sämtliche Schweißnähte, in der Fläche des Zylindermantels (2) liegen.

19. Packung nach einem der vorhergehenden Ansprüche, dadurch gekennzeichnet, daß die Trennwand (8'''') im Querschnitt der Packung (1) im wesentlichen kreisförmig ausgebildet ist.

20. Packung nach einem der vorhergehenden Ansprüche, dadurch gekennzeichnet, daß die Trennwand (8, 8'''') exzentrisch in der Packung (1) angeordnet ist, insbesondere entlang mindestens einer Längslinie (7) an der Packungsinnenseite anliegt.

21. Packung nach einem der Ansprüche 4 bis 20, dadurch gekennzeichnet, daß die Folie (6) der Trennwand und/oder der Packung (1) auf beiden Seiten eine Oberfläche aus thermoplastischem Material besitzt, insbesondere im wesentlichen vollständig aus thermoplastischem Material besteht.

22. Packung nach Anspruch 21, dadurch gekennzeichnet, daß die Folie (6) eine beidseitig mit thermoplastischem Material beschichtete Metall-, insbesondere Aluminiumfolie, ist.

23. Packung nach einem der vorhergehenden Ansprüche, dadurch gekennzeichnet, daß die Trennwand (8 bis 8'''') einlagig ausgebildet ist.

24. Packung nach einem der vorhergehenden Ansprüche, dadurch gekennzeichnet, daß den verschiedenen Kammern (9 bis 9'''; 10 bis 10''') der Packung (1) eine gemeinsame Austragdüse mit einer Mischeinrichtung, insbesondere einem statischen Mischer, zugeordnet ist.

25. Verfahren zur Herstellung der Schlauchpakkung nach einem der vorhergehenden Ansprüche, dadurch gekennzeichnet, daß Längsränder mindestens eines Folienbandes derart parallel aneinander und/oder an Längsabschnitte des Folienbandes angelegt und verschweißt werden, daß ein kreisrunder Schlauchabschnitt mit mindestens einer mindestens zwei axiale Teilkammern voneinander trennenden Trennwand gebildet wird.

26. Verfahren nach Anspruch 25, dadurch gekennzeichnet, daß die Teilkammern mit verschiedenen pastösen Massen gefüllt werden und der Schlauch durch Einschnüren seiner Enden verschlossen und abgelängt wird.

27. Verfahren zur Herstellung der Schlauchpakkung nach einem der Ansprüche 1 bis 24, insbesondere nach Anspruch 25 oder 26, dadurch gekennzeichnet, daß ein vorgefertigter, mindestens eine Trennwand aufweisender Schlauchabschnitt an einem Ende verschlossen und in Längsrichtung unter axialer Verkürzung zusammengefaltet wird und daß danach die Kammern des verkürzten Schlauchabschnittes gleichzeitig unter Streckung in Längsrichtung befüllt werden, wonach der befüllte Abschnitt am anderen Ende verschlossen und nach Bildung eines neuen verschlossenen Endes eines sich ausschließenden Schlauchabschnittes von diesem als gefüllte Packung abgetrennt wird.

28. Verfahren zur Herstellung der Schlauchpakkung nach einem der Ansprüche 1 bis 24, insbesondere nach einem der Ansprüche 25 bis 27, dadurch gekennzeichnet, daß eine Folienbahn mindestens abschnittsweise zu einer Trennwand gegebenenfalls unter Formung ausgerichtet wird und um diese Trennwand mindestens eine zweite breitere Folienbahn zu einem im Querschnitt einen Vollkreis bildenden Schlauch geformt und entlang gegenseitig angelegter, insbesondere überlappender Ränder ver schweißt wird und daß Längsränder der Trennwand nach Anlegen an die Innenwand des Schlauches mit dieser verschweißt werden.

29. Verfahren nach einem der Ansprüche 25 bis 28, dadurch gekennzeichnet, daß die Trennwand als vorzugsweise ebene Trennwand vorzugsweise mit nach einer Seite abgewinkelten Längsrändern ausgebildet wird.

30. Verfahren nach Anspruch 28 oder 29, dadurch gekennzeichnet, daß zunächst die breitere Folienbahn vorzugsweise abschnittsweise zur Bildung des Schlauches längsverschweißt wird und danach die innenliegende Trennwand durch Verschweißen ihrer Längsränder mit dem Schlauch verbunden wird.

31. Verfahren nach einem der Ansprüche 28 bis 30, dadurch gekennzeichnet, daß die Längsverschweißung zur Bildung des Schlauches und das Einschweißen der Trennwand im wesentlichen gleichzeitig vorgenommen werden, wobei vorzugsweise die Längsverbindung der Ränder der mindestens einen breiteren Folie zur Bildung des Schlauches und die Verbindung mindestens eines Längsrandes der Trennwand mit der Wand des Schlauches im Rahmen der Ausbildung mindestens einer gemeinsamen Schweißnaht vorgenommen wird.

32. Verfahren nach einem der Ansprüche 28 bis 31, dadurch gekennzeichnet, daß die die flache Trennwand bildende Folienbahn zunächst zu einem im Querschnitt U-förmig gebogenen Folienabschnitt geformt wird, wonach die Basis des Folienabschnittes eben gemacht und ihre Ränder im wesentlichen rechtwinklig abgebogen werden.

33. Verfahren nach einem der Ansprüche 25 bis 27, dadurch gekennzeichnet, daß eine einzige Folienbahn e- bzw. s-förmig gebogen und anschließend derart längsverschweißt wird, daß sich eine kreisrunde Umhüllung mit einer Trennwand im Innern ergibt.

34. Verfahren nach einem der Ansprüche 25 bis 37, dadurch gekennzeichnet, daß der Schlauchmantel (2) und die Trennwand (8) aus mindestens zwei Folienbahnen gebildet werden, wobei eine Bahn zu einem geschlossenen Teilkreis geformt und verschweißt und der Vollkreis durch äußeres längsseitiges Anschweißen der beiden Ränder mindestens einer weiteren Bahn ausgebildet wird, wobei die Trennwand durch einen Längsabschnitt des Teilkreises gebildet wird.

35. Verfahren nach einem der Ansprüche 25 bis 34, dadurch gekennzeichnet, daß die Befüllung der einzelnen Kammern mit den Komponenten gleichzeitig durch Volumendosierung vorgenommen wird.

36. Vorrichtung zur Durchführung des Verfahrens nach einem der Ansprüche 25 bis 35, gekennzeichnet durch ein Formstück (17) zur Formung der mindestens einen Trennwand (8'''') aus mindestens einer Folie, einem im wesentlichen kreiszylindrischen Werkzeug (18), dessen Außenmaße im wesentlichen den Innenmaßen des Schlauches (2) entspricht, eine Längsunterteilung (19) des Werkzeuges entsprechend der Form und Lage der Trennwand zum Hindurchführen der Trennwand durch das Werkzeug einem weiteren Formstück (20) zur Bildung des Schlauches (2) aus mindestens einer zweiten Folie um das Werkzeug (18) und die Trennwand (8'''') herum sowie Schweißbalken (22) zum Verbinden überlappender Längsränder (14) des Schlauches und der Längsränder (13) der Trennwand mit dem Schlauch im Zusammenwirken mit dem zylindrischen Werkzeug (18).

37. Vorrichtung nach Anspruch 36, dadurch gekennzeichnet, daß das Werkzeug (18) lediglich an seiner die Trennwand aufnehmenden Schmalseite gelagert ist und über seine restliche Länge frei im Schlauch (2) angeordnet bzw. über diesen abgestützt ist.

38. Vorrichtung nach Anspruch 36 oder 37, dadurch gekennzeichnet, daß mindestens zwei Fülleitungen (23) zum Befüllen der Kammern (9) mit verschiedenen Komponenten auf den jeweiligen Seiten des Trennwandspaltes (19) des Werkzeuges (18) längs durch dieses hindurchgehen.

39. Verwendung der Schlauchpackung nach einem der Ansprüche 1 bis 25 als Mehrkomponenten-Packung in einer Spritzpistole, insbesondere einer solchen, die mit einer Mischeinrichtung versehen ist.

FIG.1

FIG.2 a) b) c) d)

FIG.3

FIG.4 a) b)

FIG.5 a) b)

FIG.6

FIG.8

FIG.7

EP 0 340 657 A1

Europäisches Patentamt

# EUROPÄISCHER RECHERCHENBERICHT

Nummer der Anmeldung

EP 89 10 7746

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 196 635  (DU PONT DE NEMOURS) * Seite 3, Zeile 13 - Seite 4, Zeile 10; Seite 5, Zeile 19 - Seite 6, Zeile 37; Seite 7, Zeile 17 - Seite 8, Zeile 21; Figuren * | 1,2,4,6 -13,15- 18,20, 21,23, 25,26, 33,34, | B 65 D  81/32 B 65 B  29/10 |
| A | | 3,5,28- 32 | |
| | --- | | |
| X | US-A-4 009 778  (HOWELL) * Spalte 4, Zeilen 9-60; Spalte 5, Zeilen 1-59; Figuren 1-4 * | 1,2,4,6 -13,15, 16,18- 21,23, 25,26, 33,35 | |
| A | | 3,5 | |
| | --- | | |
| X | US-A-2 609 880  (DYER) * Spalte 2, Zeile 3 - Spalte 3, Zeile 58; Figuren * | 1,4,6,8 -18,23, 25,33, 34 | |
| | --- | | RECHERCHIERTE SACHGEBIETE (Int. Cl.4) |
| X | US-A-3 889 446  (SIMMONS) * Spalte 6, Zeile 55 - Spalte 7, Zeile 32, Figuren 8-9 * | 1,2,4,6 ,10-12, 16,25, 26,35 | B 65 D B 65 B E 21 D |
| A | | 28-32, 34,36, 38 | |
| | ---                     -/- | | |

Der vorliegende Recherchenbericht wurde für alle Patentansprüche erstellt

| Recherchenort | Abschlußdatum der Recherche | Prüfer |
|---|---|---|
| DEN HAAG | 04-08-1989 | MARTENS L.G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

Nummer der Anmeldung

EP 89 10 7746

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AU-B- 503 447 (ICI AUSTRALIA LTD) * Seiten 7-9; Figuren * | 1,2,4,6 -9,11, 12,16, 18-21, 23,25, 26,28, | |
| | --- | | |
| X A | AU-B- 503 447 | 35 36,38 | |
| | --- | | |
| X A | FR-A-2 105 167 (IMPERIAL CHEMICAL INDUSTRIES) * Seite 3, Zeile 24 - Seite 4, Zeile 14; Figuren * | 1,2,4,6 ,12,16, 19,21, 23 3,5,25- 28,34 | |
| | --- | | |
| A | US-A-4 353 463 (SEEMANN) * Spalte 3, Zeilen 64-66; Spalte 5, Zeilen 31-47; Spalte 6, Zeile 57 - Spalte 7, Zeile 32; Figuren 2,6 * ----- | 1,3,5, 22,24, 39 | |
| | | | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 04-08-1989 | MARTENS L.G.R. |